# FASCICULE DE BREVET EUROPEEN

(11) **EP 3 320 223 B1**
(45) Date de publication et mention de la délivrance du brevet: **26.06.2019**
(21) Numéro de dépôt: 16748331.2
(22) Date de dépôt: 08.07.2016
(51) Int. Cl.: F16F 7/12

(54) **MODULE D'ABSORPTION DE CHOCS POUR VÉHICULE AUTOMOBILE**
STOSSFÄNGERMODUL FÜR EIN KRAFTFAHRZEUG
BUMPER MODULE FOR AN AUTOMOTIVE VEHICLE

(30) Priorité: 10.07.2015 FR 1556589
(43) Date de publication de la demande: 16.05.2018
(73) Titulaire: Compagnie Plastic Omnium, 69007 Lyon (FR)
(72) Inventeur: GINJA, Stéphane, 01500 Amberieu En Bugey (FR); CORVEILLE, Thierry, 01800 Meximieux (FR)
(74) Mandataire: LLR
(86) Numéro de dépôt international: PCT/FR2016/051743
(87) Numéro de publication internationale: WO 2017/009556

(56) Documents cités:
- WO-A1-2008/061859
- WO-A1-2009/141331
- WO-A2-2008/087346

## Description

La présente invention concerne le domaine des absorptions de chocs dans les véhicules automobiles, et en particulier de chocs de type choc assurance.

Un module d'absorption de chocs doit pouvoir absorber efficacement l'énergie d'un choc de manière à protéger les occupants du véhicule automobile, et cela sans être trop encombrant.

En matière de chocs, les constructeurs automobiles s'imposent un cahier des charges qui envisage quatre principales catégories d'impacts, à savoir :
- les chocs de type haute vitesse, qui correspondent à un impact frontal, latéral ou arrière du véhicule contre un obstacle rigide ou déformable. Pour un choc frontal, la vitesse du véhicule est d'au moins 56 km/h, avec un objectif de protection des occupants du véhicule.
- les chocs de type assurance, à environ 15 km/h contre un mur fixe, tel que celui connu sous le nom de Danner ou encore AZT, ou à environ 8 km/h contre un angle de mur ou contre un poteau (chocs poteau, norme IIHS), traités avec un objectif de limitation des dégâts et coûts de réparation associés.
- les petits chocs, ou chocs de type parking, à une vitesse inférieure à 8 km/h, traités avec un objectif de non détérioration extérieure de la peau de pare-chocs.
- les chocs piétons réglementaires (jambe, fémur et tête).

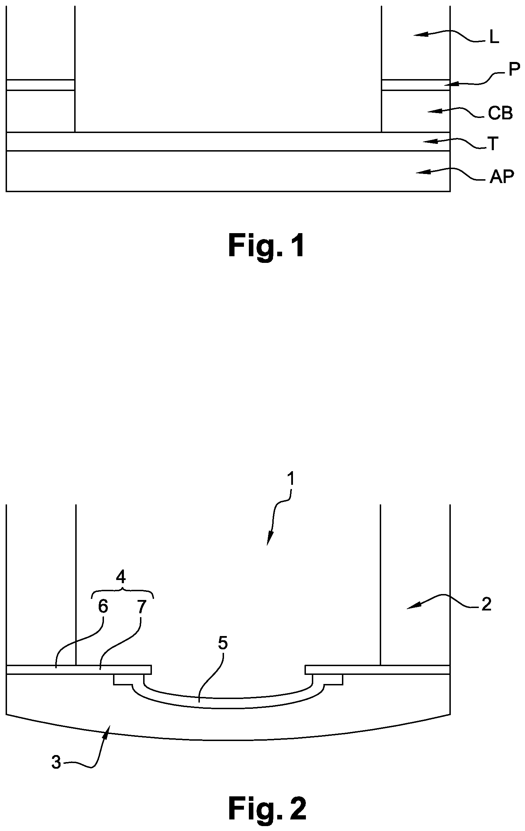

On connaît (figure 1) un module d'absorption de chocs permettant notamment d'empêcher, lors d'un choc assurance, la déformation des longerons, afin notamment d'épargner le système de refroidissement et les autres organes placés derrière lui.

Ce module d'absorption comprend en voie haute une poutre de choc constituée d'une traverse T prenant appui sur deux longerons avant L du véhicule par l'intermédiaire d'absorbeurs de type « crash box » CB et de deux platines de fixation P. L'absorption d'énergie se fait par compression longitudinale (dite aussi par « botellement » de ces absorbeurs). Les absorbeurs de type « crash box » sont fixés sur les longerons, et ils ont une fonction de choc assurance. Ils sont déformés de façon irréversible lors de choc à partir d'environ 6 km/h.

Un tel module peut également comporter un absorbeur transversal AP, positionné devant la traverse sur laquelle il prend appui. Cet absorbeur transversal a une fonction de choc piéton. Il est capable d'absorber de l'énergie par compression contre la poutre de chocs.

On appelle "poutre de choc », un ensemble d'une traverse, d'au moins un absorbeur de type « crash box » et de platines.

Dans la présente demande, on appelle "traverse" (appelé aussi barreau), une structure longitudinale rigide s'étendant entre deux points par lesquels elle est fixée. On notera qu'une telle traverse n'assure qu'une très faible fonction d'absorption d'énergie en cas de choc (moins de 5%). Une traverse a pour fonction première de maintenir la liaison et l'écartement entre les longerons en cas de choc.

Généralement la traverse, les platines et les crash-box sont en acier ou en aluminium. Dans un souci d'allégement des modules d'absorption de chocs, il existe des alternatives aux poutres de choc métalliques (acier, alu). On connait ainsi des modules comportant des traverses en matière plastique.

Ainsi, dans ce type de module d'absorption, les longerons ne sont liés entre eux que par l'intermédiaire des absorbeurs et de la traverse. Or, les absorbeurs sont généralement des « crash box », localisés seulement dans le prolongement des longerons, chacun étant conçu pour absorber l'énergie de chocs dirigés principalement dans l'axe du longeron qui le porte.

En cas de choc oblique ou de choc décalé (choc frontal dont l'impact sur le cadre n'est pas exactement dans l'axe du longeron), la force imprimée aux absorbeurs comporte nécessairement une composante oblique, que les absorbeurs ne peuvent pas transférer en s'appuyant sur le longeron.

L'énergie du choc risque, en conséquence, d'être intégralement reportée sur l'absorbeur et le longeron qui se trouvent sensiblement dans l'axe de l'impact pour un choc décalé, et le plus proche de la zone d'impact pour un choc oblique.

En d'autres termes, les longerons ne sont pas efficacement couplés entre eux, si bien qu'en cas de choc, l'effort n'est pas réparti de façon suffisamment homogène sur les deux longerons.

Par ailleurs, dans le cas d'un choc sur la poutre de choc dans une zone centrale entre les longerons, l'énergie est répartie de façon relativement homogène entre les longerons et les crash-box droit et gauche, mais la traverse en absorbant très peu, ce sont les crash-box qui réalisent cette fonction d'absorption : ainsi au global de l'ensemble « poutre de choc », seules les crash-box permettent d'absorber cette énergie, ce qui ne constitue pas un fonctionnement optimal de l'ensemble en absorption de l'énergie du choc.

On connaît également dans l'état de la technique, notamment d'après le document WO07074300, un module d'absorption de chocs avant intégrant toutes les fonctions du choc avant (piéton et réparabilité) dans un même cadre absorbeur. Dans ce module, la traverse est en appui direct sur le bout des longerons. Ce module ne comporte donc pas d'absorbeur de type « crash box » intercalé entre le longeron et la traverse. Ce module comporte uniquement deux platines et une traverse, sur laquelle vient en appui un absorbeur transversal. Ce dernier possède une surface de recouvrement plus importante que l'association de deux absorbeurs de type « crash box », et donc, une capacité à absorber l'énergie des chocs plus grande.

Le document WO 2008/087346 A2 montre un module d'absorption de chocs selon le préambule de la revendication 1.

L'invention vise à fournir un système d'absorption de chocs alternatif encore plus performant en termes d'absorption.

A cet effet, l'invention a pour objet un module d'absorption de chocs destiné à être agencé sur les longerons d'un véhicule automobile. Ce module comporte au moins un absorbeur de choc, une traverse s'étendant selon une direction transversale du véhicule, et deux platines adaptées à être rapportées directement sur la face avant ou arrière des longerons. Selon l'invention, l'absorbeur de choc s'étend selon une direction transversale du véhicule, et vient en appui direct sur la traverse. De plus, chaque extrémité latérale de l'absorbeur de choc est en appui direct sur une première zone de l'une des platines, et chaque extrémité latérale de la traverse est en appui direct sur une seconde zone de l'une des platines et/ou en appui direct sur une zone des longerons (2).

La position de la traverse et de l'absorbeur de choc, tous deux en appui direct sur les platines, permet d'optimiser le rendement d'absorption, car on supprime le fait que la traverse incompressible se trouve entre le point d'impact et le longeron. L'absorbeur peut alors totalement remplir sa fonction d'absorption. En effet, au droit des platines de longerons, l'absorbeur n'est pas en appui sur la traverse; autorisant ainsi une réduction de la côte incompressible classiquement due à la faible compressibilité de la traverse.

Par ailleurs, ce module comporte une surface utile à l'absorption plus importante que l'association de deux absorbeurs de type « crash box ». Lors d'un choc, toute la surface de l'impacteur (de type barrière rigide ou déformable) en contact avec le véhicule est en vis-à-vis de l'absorbeur. La capacité à absorber l'énergie des chocs du module selon l'invention est donc plus importante.

Selon l'invention, la traverse est adaptée à être positionnée entre les longerons, de façon à mieux maintenir l'écartement entre les deux longerons en cas de choc.

Selon un mode de réalisation préféré, l'absorbeur de choc vient en appui direct sur toute la traverse.

De préférence, la seconde zone n'est pas positionnée dans le prolongement des longerons, lorsque le module est monté sur les longerons.

Selon un mode de réalisation, l'absorbeur de choc s'étend transversalement au-delà des platines, permettant de mieux absorber les chocs coin.

Selon l'invention, l'absorbeur de choc peut être un absorbeur RCAR réalisant la fonction de choc assurance.

Selon un mode de réalisation, le module comporte en plus un absorbeur de choc piéton en appui sur l'absorbeur de choc. Cet absorbeur de choc piéton peut être intégré directement par moulage à l'absorbeur de choc.

Selon l'invention, la traverse peut avoir avantageusement une épaisseur plus faible au niveau de ses extrémités.

La traverse peut être réalisée en matière plastique par un procédé de pultrusion, et l'absorbeur de choc peut être réalisé en matière plastique par un procédé d'injection. La traverse peut alors avoir un profilé de forme convexe à section ouverte.

Enfin, de façon avantageuse, l'absorbeur de choc et la traverse peuvent former un cadre absorbeur mono pièce en matière plastique.

L'invention sera mieux comprise à la lecture des figures annexées, qui sont fournies à titre d'exemples et ne présentent aucun caractère limitatif, dans lesquelles :
La figure 1 illustre un exemple de module d'absorption de chocs pour un véhicule automobile selon l'art antérieur.
La figure 2 illustre un mode de réalisation du module d'absorption de chocs pour un véhicule automobile selon l'invention.
La figure 3 illustre une variante de l'exemple de la figure 1, dans laquelle l'absorbeur de choc s'étend transversalement au-delà des platines.
La figure 4 illustre une variante de l'exemple de la figure 1, dans laquelle le module comporte un absorbeur de choc piéton.
La figure 5 illustre une variante de l'exemple de la figure 1, dans laquelle le module comporte un appui bas piéton, relié à la traverse par le biais de bretelles.
Les figures 6A à 6D illustrent des variantes de l'exemple de la figure 1, illustrant différentes solutions pour la surface d'appui de la traverse sur la platine et/ou sur le longeron.
Les figures 7A et 7B illustrent des variantes de l'exemple de la figure 1 : la traverse peut être droite (figure 7A), et la traverse peut avoir une épaisseur variable (figure 7B).

On se réfère maintenant à la figure 1 qui illustre un module 1 d'absorption de chocs pour un véhicule automobile selon l'invention.

Selon l'exemple de réalisation décrit ci-après, le module 1 d'absorption est destiné à être agencé devant les longerons 2 du véhicule automobile. Toutefois, le module 1 d'absorption peut être destiné à être agencé derrière les longerons 2 du véhicule automobile, afin d'absorber des chocs arrière.

Le module 1 comporte au moins un absorbeur de choc 3, une traverse 5 s'étendant selon une direction transversale du véhicule, et deux platines 4. Comme l'illustre la figure 1, les platines 4 sont adaptées à être fixées directement sur la face avant (ou arrière dans le cas où le module 1 est destiné à être agencé derrière les longerons 2) des longerons 2.

On notera que le module 1 peut être assemblé en dehors de la chaîne de montage du véhicule, de façon à être rapporté en un seul bloc sur le châssis.

Comme l'illustre la figure 1, l'absorbeur de choc 3 s'étend selon une direction transversale du véhicule, et vient en appui direct sur la traverse 5. De préférence, l'absorbeur de choc 3 vient en appui direct sur toute la traverse 5. De plus, chaque extrémité latérale de l'absorbeur de choc 3 est en appui direct sur une première zone 6 de la face avant de l'une des platines 4, et chaque extrémité latérale de la traverse 5 est en appui direct sur une seconde zone 7 de la face avant de l'une des platines 4 et/ou en appui direct sur une zone (7') des longerons (2).

Du fait que, et la traverse 5 et l'absorbeur 3 transversal sont en appui direct sur les platines 4, ce module 1 a un niveau d'absorption au choc, au droit des longerons, supérieur au module de l'art antérieur. En effet, aucun élément rigide, tel que la traverse 5, ne limite l'absorption du module lors d'un choc.

Selon l'invention, la traverse 5 est adaptée à être positionnée entre les longerons 2, c'est-à-dire qu'aucune des extrémités de la traverse 5 n'est positionnée dans le prolongement (en X) des longerons 2.

La traverse 5 a ainsi une taille réduite par rapport aux traverses des modules antérieurs, tout en remplissant sa fonction de maintien de l'écartement entre les deux longerons 2 en cas de choc avant.

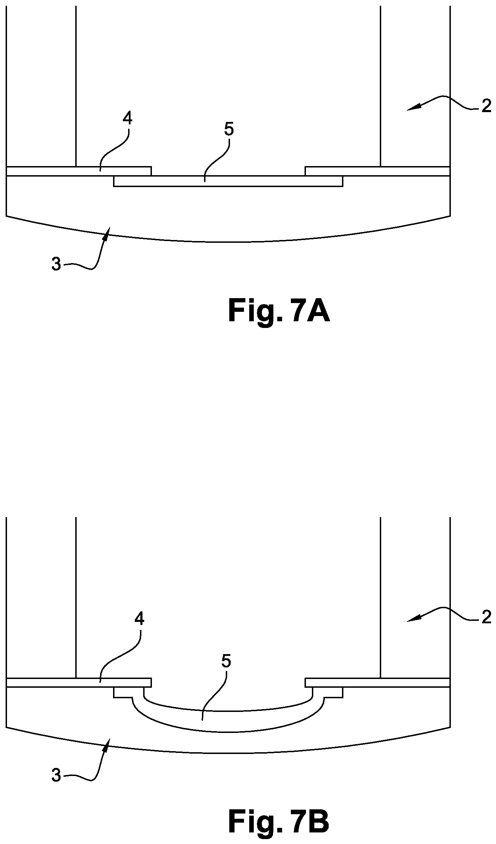

Selon un mode de réalisation, illustré sur la figure 7B, la traverse 5 a une épaisseur plus faible au niveau de ses extrémités. Ainsi, la course de compression de l'absorbeur de choc 3 est augmentée, tout en conservant, au centre, une épaisseur plus importante pour avoir plus d'inertie.

Une platine 4 est un support d'appui de forme sensiblement plate en métal ou en matière composite.

Cette platine comporte une face arrière adaptée à venir se plaquer et se fixer contre la surface avant des longerons 2 (bout des longerons). Cette face arrière est munie de moyens de fixation à un longeron.

Cette platine comporte également une face avant contenant les zones 6 et 7. L'assemblage entre la face avant de la platine 4 et la traverse 5 peut être de type queue d'aronde, ou bien bridage mécanique (vissage, soudage...).

Selon un mode de réalisation, la zone 6 correspond à une zone de la face avant contenant au moins une partie de la surface de la face avant située au droit des longerons 2. De préférence, la zone 6 correspond à une zone de la face avant contenant toute la surface de la face avant située au droit des longerons 2. Avantageusement, la zone 6 est de même largeur que les longerons 2. Selon l'invention, cette première zone 6 sert d'appui à l'absorbeur de choc 3.

Selon un mode de réalisation, la zone 7 correspond à une zone de la face avant contenant au moins une partie d'une surface de la face avant de la platine 4 n'étant pas située dans le prolongement (en X) du longeron et située, une fois la platine 4 montée sur un longeron 2, entre les deux longerons 2. De préférence, la zone 7 ne contient pas la surface de la face avant située au droit (en X) des longerons 2 : la zone 7 n'est pas positionnée dans le prolongement (en X) des longerons 2, lorsque le module 1 est monté sur les longerons 2. Selon l'invention, cette seconde zone 7 sert d'appui à la traverse 5.

La seconde zone 7 peut être un prolongement (en Y, vers l'axe Y0 du véhicule) de la première zone 6 au-delà des longerons 2, comme l'illustre la figure 1.

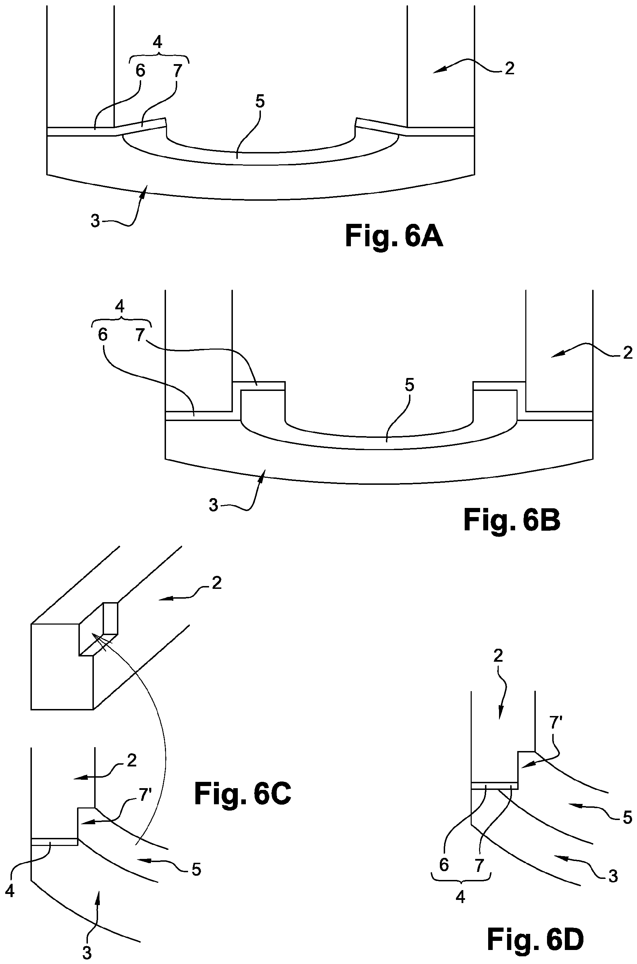

Ainsi, la seconde zone 7 apparait comme une surface en saillie (en porte-à-faux) du longeron vers le deuxième longeron. Cette seconde surface peut également avoir un angle non nul avec la première zone 6. Par exemple, une partie de la zone 6 peut être dirigée vers l'arrière du véhicule, comme l'illustre la figure 6A, ou encore avoir une forme en équerre comme l'illustre la figure 6B.

De façon générale, lorsque le module est monté sur les longerons 2, la seconde zone 7 n'est pas positionnée dans le prolongement (en X) des longerons 2. Elle est en saillie des longerons, et elle est positionnée entre les deux longerons.

Un absorbeur de choc 3 selon l'invention est un organe capable d'absorber de l'énergie par compression notamment contre la traverse 5, la traverse 5 prenant elle-même appui sur les deux longerons 2 avant du véhicule par l'intermédiaire des platines 4.

Selon un mode de réalisation préféré (figure 2), l'absorbeur de choc 3 s'étend transversalement au-delà des platines 4, vers l'extérieur du véhicule. Grâce à cette configuration, les chocs avant de biais (chocs coins) sont mieux amortis.

L'absorbeur de choc 3 est un absorbeur réalisant la fonction de choc assurance. Un absorbeur de chocs est soumis à de nombreuses exigences en matière de chocs, spécifiques à chaque pays ou région. Certains organismes, comme le RCAR (acronyme anglais pour «Research Council for Automobile Repair»), mettent en place des tests d'absorption normalisés afin d'étudier l'efficacité d'un absorbeur dans le cas de chocs dits « chocs assurance ». Ces tests visent à mesurer le coût des réparations lors d'impacts à basse vitesse (moins de 16 km/h).

Ainsi, l'absorbeur de choc 3 peut notamment être un absorbeur de type RCAR, c'est-à-dire un absorbeur répondant aux tests de l'organisme RCAR.

Le profilé de la traverse est préférentiellement à section ouverte, de type oméga notamment. Le profilé peut être droit ou courbe, de préférence de forme convexe, à galbe constant ou variable.

Dans le cas, d'une traverse 5 ayant un profilé de forme convexe (en forme de créneau ou courbe), la convexité peut être définie par la position du système de refroidissement 8 qui est classiquement à l'amont du plan des platines 2 de longerons, donc dans la convexité de la traverse 5 (figures 1 et 2).

Dans le cas où l'absorbeur de choc 3 s'étend transversalement au-delà des platines 4, vers l'extérieur du véhicule, un profilé courbe permet d'améliorer encore plus l'amortissement des chocs avant de biais (chocs coins). En effet, grâce à la position de la traverse 5 (figure 2), lors d'un choc coin, l'absorbeur de choc 3 peut travailler en compression contre la traverse 5 qui se trouve dans la direction de compression de l'absorbeur suite à l'impact, ce qui n'est pas le cas dans les modules antérieurs.

Dans le cas où le système de refroidissement est situé à l'arrière des platines 4, la traverse 5 peut être droite (non galbée), comme l'illustre la figure 7A. Dans ce cas, le volume de l'absorbeur de choc 3, pour une distance disponible identique entre le parechoc et le bout de longeron, est plus important, ce qui augmente son efficacité. La partie centrale de la traverse 5 possède alors une inertie permettant de supporter les efforts d'un choc poteau ou impacteur de choc assurance (barrière RCAR ou parechoc RCAR) ou bien barrière haute vitesse.

La traverse 5, a profilé droit ou courbe, peut être réalisé par différents procédés, et avec différentes matières plastiques, tels que :
- moulage par compression de matière thermodurcissable telle que du SMC en fibre de carbone ou fibre de verre ;
- moulage par un procédé RTM (« Resin Transfert Molding ») de matière epoxy renforcée par fibres de verre ou de carbone ;
- moulage par injection de matière thermoplastique ;
- extrusion ou pultrusion de matière thermoplastique, notamment de polyamide ;
- extrusion ou pultrusion de matière thermodurcissable, notamment de polyester, vinylesther ou epoxy.

L'absorbeur de choc 3 peut également être réalisé en matière plastique, par un procédé d'injection par exemple.

De façon préférée l'absorbeur de choc 3 et la traverse 5 forment un cadre absorbeur mono pièce en matière plastique. Ce mode de réalisation est avantageux en ce que le procédé d'assemblage du module 1 sur un véhicule est simplifié. Par ailleurs, la fabrication en une seule pièce de l'absorbeur de choc 3 et de la traverse 3 permet d'assurer un bon assemblage entre ces deux éléments, et donc un bon couplage pour mieux absorber les chocs avant.

### Variantes

Le module 1 d'absorption de chocs pour un véhicule automobile selon l'invention, peut également comporter un absorbeur de choc piéton 9.

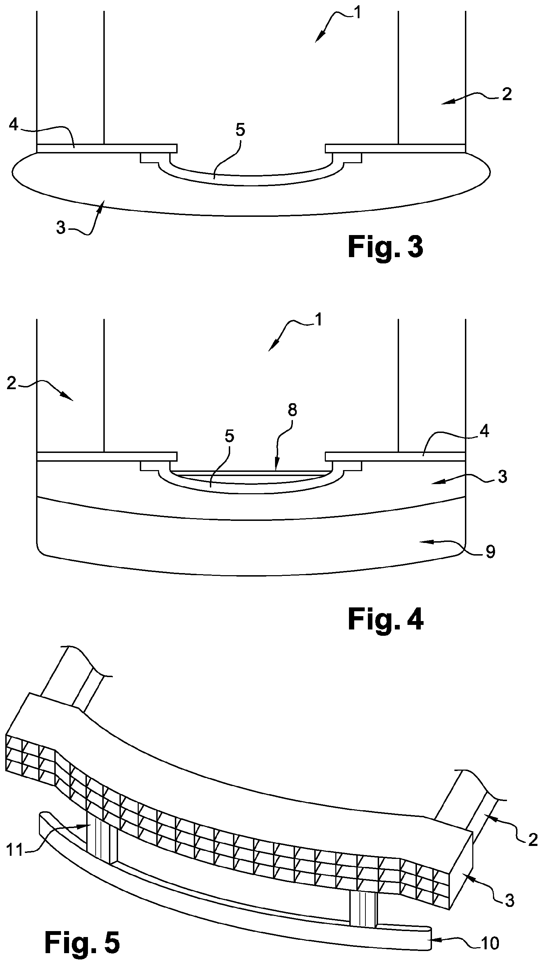

Comme l'illustre la figure 3, cet absorbeur de choc piéton 9 vient en appui sur l'absorbeur de choc 3.

L'absorbeur de choc piéton 9 est de préférence intégré directement par moulage à l'absorbeur de choc 3. De façon à optimiser l'absorption, cet absorbeur 9 comprend des nervures à l'avant de l'absorbeur 3, par exemple disposées en nid d'abeille. L'absorbeur 3 et l'absorbeur 9 peuvent constituer un seul et unique absorbeur. Dans ce cas, la fonction absorption de choc piéton est directement intégrée (venue de moulage) dans l'absorbeur RCAR, ne formant ainsi qu'une seule pièce.

L'absorbeur de choc piéton 9 peut être un absorbeur de type mousse en PPE (polyphénylène expansé) imbriquée dans l'absorbeur de choc 3.

Comme illustré sur les figures 4A et 4B, et sur la figure 5, le module 1 d'absorption de chocs pour un véhicule automobile selon l'invention, peut également comporter un appui bas piéton 10, destiné à traiter le choc piéton appelé choc jambe. Cet appui bas est relié à la traverse 5 par le biais de bretelles 11. Les deux bretelles 11 assurent une liaison rigide entre la traverse 5 et l'appui bas piéton 10. On notera que l'appui bas 10 constitue un appui rigide pour la jambe d'un piéton en cas de choc, afin de limiter les lésions sur son genou.

L'application concerne également un procédé de fabrication d'un module 1 d'absorption de chocs pour véhicule automobile selon l'invention. Le procédé comporte les étapes suivantes :
- on réalise une traverse 5 par un procédé de moulage ou par une filière, de préférence en matière thermoplastique, idéalement en polyamide (PA) ou en polypropylène (PP) ;
- on surmoule sur la traverse 5 un absorbeur de choc 3 par un procédé d'injection de matière plastique, de préférence thermoplastique, idéalement en polyamide (PA) ou en polypropylène (PP).

Selon un mode de réalisation, avant de surmouler l'absorbeur 3, la traverse subit un traitement de surface, tel qu'un flammage, un ponçage, ou un effet plasma.

Selon un mode de réalisation, avant de surmouler l'absorbeur 3, on chauffe la traverse à environ 200°C (plage entre la température de cristallisation et la température de fusion) pour activer la surface et favoriser une adhésion chimique.

L'invention n'est pas limitée aux modes de réalisation présentés et d'autres modes de réalisation apparaîtront clairement à l'homme du métier.

Il est également possible de monter un module 1 selon l'invention, à l'arrière d'un véhicule, afin d'absorber les chocs arrières.

## Revendications

1. Module (1) d'absorption de chocs destiné à être agencé sur les longerons (2) d'un véhicule automobile, le module (1) comportant au moins un absorbeur de choc (3), une traverse (5) s'étendant selon une direction transversale du véhicule, et deux platines (4) adaptées à être rapportées directement sur la face avant ou arrière des longerons (2) et dans lequel :
- l'absorbeur de choc (3) s'étend selon une direction transversale du véhicule, et vient en appui direct sur la traverse (5) ;
- chaque extrémité latérale de l'absorbeur de choc (3) est en appui direct sur une première zone (6) de l'une des platines (4) ; et
- chaque extrémité latérale de la traverse (5) est en appui direct sur une seconde zone (7) de l'une des platines (4) et/ou en appui direct sur une zone (7') des longerons (2) ;
le module étant **caractérisé en ce que** la traverse (5) est adaptée à être positionnée entre les longerons (2).

2. Module (1) selon ml revendication 1, dans lequel l'absorbeur de choc (3) vient en appui direct sur toute la traverse (5).

3. Module (1) selon l'une des revendications précédentes, dans lequel ladite seconde zone (7) n'est pas positionnée dans le prolongement des longerons (2), lorsque le module est monté sur les longerons (2).

4. Module (1) selon l'une des revendications précédentes, dans lequel l'absorbeur de choc (3) s'étend transversalement au-delà des platines (4).

5. Module (1) selon l'une des revendications précédentes, dans lequel l'absorbeur de choc (3) est un absorbeur RCAR réalisant la fonction de choc assurance.

6. Module (1) selon l'une des revendications précédentes, comportant un absorbeur de choc piéton en appui sur l'absorbeur de choc (3).

7. Module (1) selon la revendication 6, dans lequel l'absorbeur de choc piéton est intégré directement par moulage à l'absorbeur de choc (3).

8. Module (1) selon l'une des revendications précédentes, dans lequel la traverse (5) a une épaisseur plus faible au niveau de ses extrémités.

9. Module (1) selon l'une des revendications précédentes, dans lequel la traverse (5) est réalisée en matière plastique par un procédé de pultrusion, et l'absorbeur de choc (3) est réalisé en matière plastique par un procédé d'injection.

10. Module (1) selon la revendication 9, dans lequel la traverse (5) a un profilé de forme convexe à section ouverte.

11. Module (1) selon l'une des revendications précédentes, dans lequel l'absorbeur de choc (3) et la traverse (5) forment un cadre absorbeur mono pièce en matière plastique.

## Patentansprüche

1. Stoßdämpfer-Modul (1), das dazu bestimmt ist, auf den Längsträgern (2) eines Kraftfahrzeugs angeordnet zu werden, wobei das Modul (1) wenigstens einen Stoßdämpfer (3), einen Querträger (5), der sich in einer Querrichtung des Fahrzeugs erstreckt, und zwei Platten (4), die dazu eingerichtet sind, unmittelbar an der vorderen oder hinteren Fläche der Querträger (2) angebracht zu werden, aufweist, und wobei:
- der Stoßdämpfer (3) sich in einer Querrichtung des Fahrzeugs erstreckt und in unmittelbare Abstützung auf dem Querträger (5) kommt;
- jedes seitliche Ende des Stoßdämpfers (3) in unmittelbarer Abstützung auf einer ersten Zone (6) einer der Platten (4) ist; und
- jedes seitliche Ende des Querträgers (5) in unmittelbarer Abstützung auf einer zweiten Zone (7) einer der Platten (4) und/oder in unmittelbarer Abstützung auf einer Zone (7') der Längsträger (2) ist;
wobei das Modul **dadurch gekennzeichnet ist, dass** der Querträger (5) dazu eingerichtet ist, zwischen den Längsträgern (2) positioniert zu werden.

2. Modul (1) nach Anspruch 1, wobei der Stoßdämpfer (3) in unmittelbare Abstützung auf dem gesamten Querträger (5) kommt.

3. Modul (1) nach einem der vorhergehenden Ansprüche, wobei die zweite Zone (7) nicht in der Verlängerung der Längsträger (2) positioniert ist, wenn das Modul auf den Längsträgern (2) montiert ist.

4. Modul (1) nach einem der vorhergehenden Ansprüche, wobei der Stoßdämpfer (3) sich in Querrichtung über die Platten (4) hinaus erstreckt.

5. Modul (1) nach einem der vorhergehenden Ansprüche, wobei der Stoßdämpfer (3) ein RCAR-Dämpfer ist, der die Funktion einer Aufprallsicherung erfüllt.

6. Modul (1) nach einem der vorhergehenden Ansprüche, aufweisend einen Fußgängeraufpralldämpfer in Abstützung auf dem Stoßdämpfer (3).

7. Modul (1) nach Anspruch 6, wobei der Fußgängeraufpralldämpfer unmittelbar durch Gießen in den Stoßdämpfer (3) integriert ist.

8. Modul (1) nach einem der vorhergehenden Ansprüche, wobei der Querträger (5) eine Dicke aufweist, die im Bereich seiner Enden geringer ist.

9. Modul (1) nach einem der vorhergehenden Ansprüche, wobei der Querträger (5) durch ein Strangziehverfahren aus Kunststoff realisiert ist und der Stoßdämpfer (3) durch ein Spritzgußverfahren aus Kunststoff realisiert ist.

10. Modul (1) nach Anspruch 9, wobei der Querträger (5) ein Profil mit konvexer Form und geöffnetem Querschnitt aufweist.

11. Modul (1) nach einem der vorhergehenden Ansprüche, wobei der Stoßdämpfer (3) und der Querträger (5) einen einstückigen Dämpferrahmen aus Kunststoff bilden.

## Claims

1. Bumper module (1) intended to be arranged on the longitudinal members (2) of an automotive vehicle, the module (1) comprising at least one shock absorber (3), a cross-member (5) extending in a transverse direction of the vehicle and two plates (4) adapted to be attached directly to the front or rear of the longitudinal members (2) and wherein:
- the shock absorber (3) extends in a transverse direction of the vehicle, and rests directly on the cross-member (5);
- each lateral end of the shock absorber (3) rests directly on a first area (6) of one of the plates (4); and
- each lateral end of the cross-member (5) rests directly on a second area (7) of one of the plates (4) and/or rests directly on an area (7') of the longitudinal members (2);
the module being **characterised in that** the cross-member (5) is adapted to be positioned between the longitudinal members (2).

2. Module (1) according to claim 1, wherein the shock absorber (3) rests directly on the entire cross-member (5).

3. Module (1) according to one of the preceding claims, wherein said second area (7) is not positioned in the extension of the longitudinal members (2), when the module is mounted on the longitudinal members (2).

4. Module (1) according to one of the preceding claims, wherein the shock absorber (3) extends transversely past the plates (4).

5. Module (1) according to one of the preceding claims, wherein the shock absorber (3) is an RCAR absorber performing the insurance impact function.

6. Module (1) according to one of the preceding claims, comprising a pedestrian impact absorber resting on the shock absorber (3).

7. Module (1) according to claim 6, wherein the pedestrian impact absorber is integrated directly by moulding into the shock absorber (3).

8. Module (1) according to one of the preceding claims, wherein the cross-member (5) is thinner at its ends.

9. Module (1) according to one of the preceding claims, wherein the cross-member (5) is made of plastic material using a pultrusion method, and the shock absorber (3) is made of plastic material using an injection method.

10. Module (1) according to claim 9, wherein the cross-member (5) has a convex profile with open section.

11. Module (1) according to one of the preceding claims, wherein the shock absorber (3) and the cross-member (5) form a one-piece absorber frame made of plastic material.
